# EUROPEAN PATENT APPLICATION

(11) **EP 3 716 225 A1**
(43) Date of publication of application: **30.09.2020**
(21) Application number: 19195581.4
(22) Date of filing: 05.09.2019
(51) Int. Cl.: G07C 9/00, G01S 5/02, B60R 25/24, H04B 1/713

(54) **DISTANCE-MEASURING SYSTEM AND DISTANCE-MEASURING METHOD**

(30) Priority: 25.03.2019 JP 2019057263
(71) Applicant: Kabushiki Kaisha Toshiba, Minato-ku Tokyo 105-0023 (JP); Toshiba Electronic Devices & Storage Corporation, Tokyo, 105-0023 (JP)
(72) Inventor: Makari, Hiroo, Tokyo, 105-0023 (JP); Nishikawa, Masaki, Tokyo, 105-0023 (JP); Nito, Yoshiharu, Tokyo, 105-0023 (JP); Ootaka, Shoji, Tokyo, 105-0023 (JP); Yoshida, Hiroshi, Tokyo, 105-0023 (JP)
(74) Representative: Hoffmann Eitle

(57) **Abstract**

A distance-measuring system of an embodiment configured to calculate a distance between a first device and a second device based on transmission and reception between the first device and the second device includes a communication section configured to communicate with a first frequency band and/or with a second frequency band different from the first frequency band, a determination section configured to determine whether the first device is located within a predetermined range of the second device, and a control section configured to control, when a determination result of the determination section shows that the first device is not within the predetermined range, to perform a distance-measuring operation is performed with the first frequency band, and when a determination result of the determination section shows that the first device is within the predetermined range, to perform a distance-measuring operation with the second frequency band.

## Description

### FIELD

Embodiments described herein relate generally to a distance-measuring system, a distance-measuring device and a distance-measuring method.

### BACKGROUND

In recent years, a technology of keyless entry has been adopted in many vehicles. The technology uses wireless communication between a vehicle's key and a vehicle to lock and unlock a door. In addition, in recent years, a technology of smart entry has also been employed, which can lock and unlock the door and start an engine without using a key.

However, vehicle thefts occur frequently in which attackers invade the wireless communication between the key and the vehicle. As a defensive countermeasure against attacks (relay attacks), measures are studied that when a distance between the key and the vehicle is determined to be beyond a certain value, control of the vehicle by communication is prohibited.

As a distance-measuring system, there is a communication type distance-measuring system that uses a phase detection method to determine a distance between devices by wireless communication.

In the smart entry, there is a problem that it may be difficult to start the engine because it becomes unable to perform distance-measuring by the communication type distance-measuring due to a large influence of multipath inside the vehicle.

### BRIEF DESCRIPTION OF THE DRAWINGS

Fig. 1 is a block diagram showing a vehicle mounted device and a key device using a distance-measuring system according to a first embodiment of the present invention;
Fig. 2 is a diagram for explaining the mechanism of smart entry;
Fig. 3 is an explanatory view showing a mounting state of LF units 20 in a vehicle 1;
Fig. 4 is an explanatory view showing a radio wave reaching range of LF units 20, which transmit radio waves;
Fig. 5 is a diagram showing an example of an appearance of a smart key 2 corresponding to the vehicle 1;
Fig. 6 is a diagram for explaining a mechanism of the smart entry using a distance-measuring result;
Fig. 7 is an explanatory diagram of weak radio wave;
Fig. 8 is a block diagram showing an example of a specific configuration of an RF unit 30;
Fig. 9 is a flowchart of operation of a vehicle mounted device 10;
Fig. 10 is a flowchart of operation of a key device 40;
Fig. 11 is a diagram for explaining a mechanism of smart entry of an embodiment of the present invention;
Fig. 12 is a flowchart showing operation of a vehicle mounted device employed in a second embodiment of the present invention; and
Fig. 13 is a flowchart showing operation of a key device employed in the second embodiment of the present invention.

### DETAILED DESCRIPTION

A distance-measuring system of an embodiment is a distance-measuring system configured to calculate a distance between a first device and a second device based on transmission and reception between the first device and the second device, the distance-measuring system including a communication section configured to communicate with a first frequency band and/or with a second frequency band different from the first frequency band, a determination section configured to determine whether the first device is located within a predetermined range of the second device, and a control section configured to control to perform a distance-measuring operation with the first frequency band when a determination result of the determination section shows that the first device is not within the predetermined range, and to perform a distance-measuring operation with the second frequency band when a determination result of the determination section shows that the first device is within the predetermined range.

Hereinafter, embodiments of the present invention will be described in detail with reference to the drawings.

### (Embodiment 1)

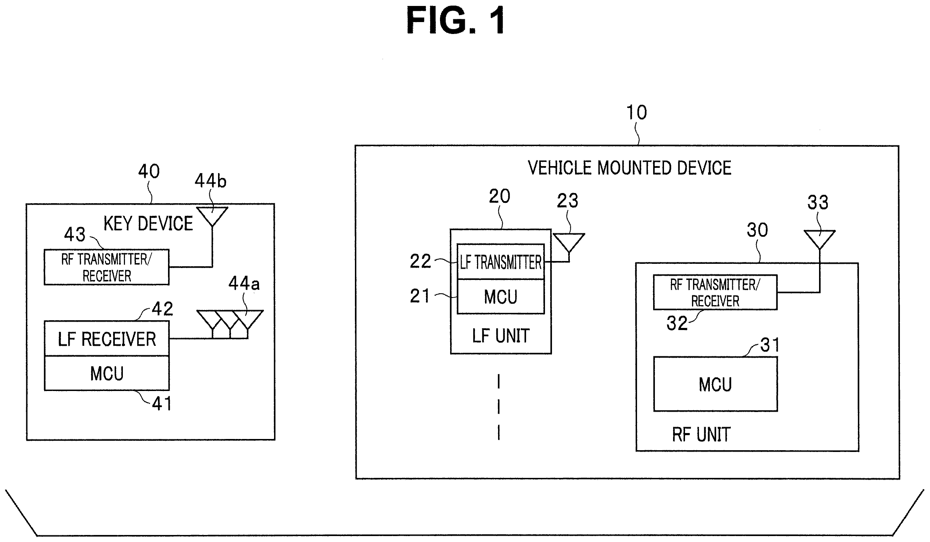

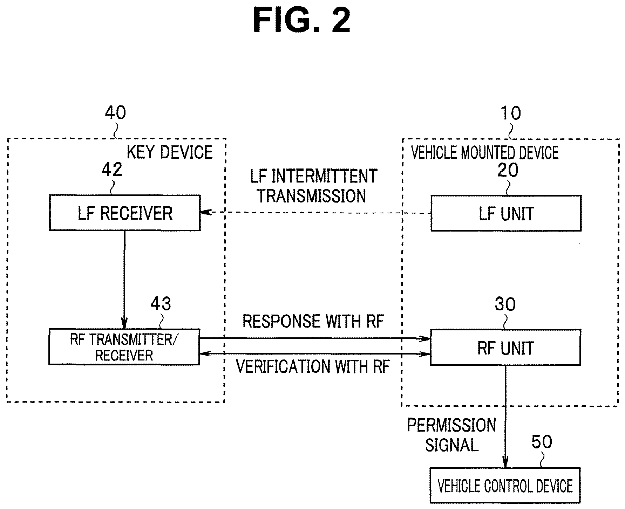

Fig. 1 is a block diagram showing a vehicle mounted device and a key device using a distance-measuring system according to a first embodiment of the present invention. Fig. 2 is a diagram for explaining the mechanism of smart entry. In the present embodiment, when it is detected that a distance-measuring target is located within a predetermined range, by performing communication while changing frequency using a weak radio wave, a more reliable distance-measuring becomes available. In the embodiment, an example of a communication type distance-measuring using a phase detection method, which uses an unmodulated carrier, is explained. In the present embodiment, the distance-measuring target is a smart key 2, and the predetermined range is assumed to be a vicinity of a vehicle or an inside of the vehicle. In addition to the communication type distance-measuring system, there are some other methods to detect that the smart key 2 is located in the vicinity of the vehicle or inside the vehicle.

The vehicle mounted device 10 includes a plurality of LF (low frequency) units 20, which include antennas 23, and an RF (radio frequency) unit 30, which includes an antenna 33. Each of the LF units 20 includes an MCU (micro control unit) 21 and an LF transmitter 22. The MCU 21 controls the LF transmitter 22. The LF transmitter 22. transmits a predetermined low frequency, for example, a radio wave (LF signal) of a band of 130 KHz through the antenna 23. The LF unit 20 intermittently transmits radio waves with low frequency at a relatively low power, and a radio wave reaching range of the radio waves is very short.

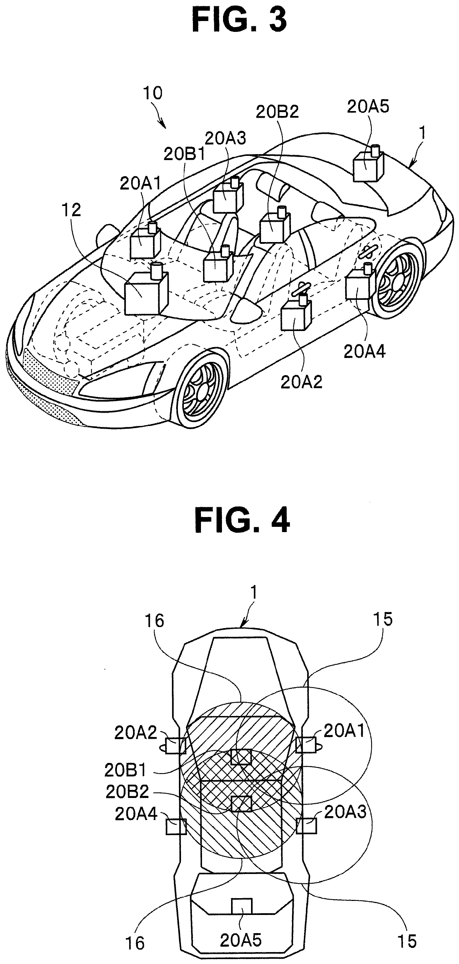

Fig. 3 is an explanatory view showing a mounting state of the LF unit 20 in the vehicle 1. Note that a not-shown vehicle control device 50 is mounted on the vehicle 1. Fig. 4 is an explanatory view showing the radio wave reaching ranges of radio wave transmitted by the LF units 20. In Fig. 4, the radio wave reaching ranges of only some of the LF units 20 are shown by circles. The vehicle 1 is provided with seven LF units 20(20A1 to 20A5, 20B1, 20B2). The LF units 20A1 to 20A5 are used for determination outside the vehicle and when not necessary to distinguish among the LF units 20A1 to 20 A5, the LF units 20 for outside of the vehicle are simply referred to as LF units 20A. The LF units 20B1 and 20B2 are used for determination inside the vehicle and when it is not necessary to distinguish between the LF units 20B1 and 20B2, the LF units 20 for inside of the vehicle are simply referred to as LF units 20B.

The LF units 20 may perform LF intermittent transmission attaching ID information to the transmission radio wave, which are used for identifying each LF unit. The ID information may not only distinguish each of LF units but also distinguish between LF units for determination outside the vehicle and determination inside the vehicle. The LF units 20 can operate independently of each other, and may also be performed timing control of LF intermittent transmission.

The LF units 20A are disposed in the vicinity of the end of a door or the like of the vehicle 1. The radio wave reaching range 15 from the LF units 20A are, for example, about 1 m in radius. Therefore, radio waves from the LF units 20 A can be received in the vicinity outside of the vehicle 1.

The LF units 20B are disposed in the vicinity of the center of the inside of vehicle such as a driver's seat or a passenger's seat of the vehicle 1. The radio wave reaching range 16 from the LF units 20B are, for example, about 1 m in radius. Therefore, radio waves from the LF units 20B can only be received inside the vehicle 1. In the present embodiment, when the radio wave from the LF units 20B are received, it can be detected that the distance-measuring target is located inside the vehicle 1 within the predetermined range.

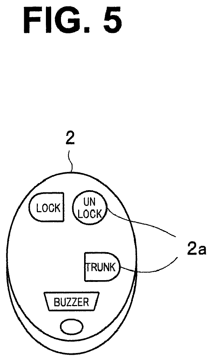

Fig. 5 is a diagram showing an example of the appearance of the smart key 2 corresponding to the vehicle 1. The smart key 2 is provided with various operation buttons 2a, and the key device 40 of Fig. 1 is built in. Note that the key device 40 operates as a so-called remote control key by operating the operation buttons 2a. The LF receiver 42 is generally irrelevant at the time.

As shown in Fig. 1, the key device 40 includes an MCU 41, an LF receiver 42, an RF transmitter/receiver 43, and antennas 44a, 44b. The MCU 41 performs various judgements/controls in the key device 40. When the LF receiver 42 is located within the radio wave reaching ranges 15, 16 indicated in Fig. 4, the LF receiver 42 receives the radio wave LF intermittently transmitted (LF signal) from the LF units 20 via the antenna 44a. When the LF receiver 42 receives the LF signal, the RF transmitter/receiver 43 transmits a high frequency signal (RF signal) as a response. Thus, communication by RF signal is performed between the RF transmitter/receiver 43 and the RF unit 30. Note that the radio wave reaching ranges of the RF transmitter/receiver 43 and the RF unit 30 are set to be larger than the radio wave reaching ranges of the LF units 20 in order to enable the signal for the remote control key to be output.

The RF unit 30 includes an MCU 31 and an RF transmitter/receiver 32. The MCU 31 performs various determinations/controls in the vehicle mounted device. The RF transmitter/receiver 32 communicates with the RF transmitter/receiver 43. When the RF transmitter/receiver 32 receives the RF signal, the MCU 31 controls to perform transmission and reception for verification process with the key device 40.

In the verification process, when the MCU 31 determines that the received RF signal is a radio wave from the smart key 2 corresponding to the vehicle 1, the MCU 31 obtains a result of successful verification. The RF unit 30 outputs a permission signal to the vehicle control device 50, indicating that the verification is successful. When receiving the permission signal, the vehicle control device 50 permits unlocking the door of the vehicle 1 and starting of the engine. Note that an operation permitted by one verification may be limited to either unlocking the door or starting the engine. In addition, it is possible that when the verification is performed based on the response of the LF units 20A, unlocking the door is permitted; and when the verification is performed based on the response of the LF units 20B, starting the engine is permitted.

As described above, in the smart key system, the LF receiver 42 can receive radio waves from the LF units 20 and performs RF communication for verification only when the smart key 2 is located within the radio wave reaching range of the LF units 20 in the vicinity of the vehicle 1.

In such a smart key system, the relay attackers intercept the transmission radio wave from the LF units 20 and relay it to the smart key 2. Even if the smart key 2 is not located in the vicinity of the vehicle 1, the smart key 2 is made to receive the LF intermittent communication from the LF units 20, and performs the RF communication with the vehicle mounted device 10, thereby unlocking the door of the vehicle 1 and starting the engine are made possible.

Therefore, in the present embodiment, the distance between the RF unit 30 of the vehicle 1 and the RF transmitter/receiver 43 of the smart key 2 is determined by using the communication type distance-measuring, which uses an unmodulated carrier. The permitted signal is output to the vehicle control device 50 only when the determined distance is less than the predetermined threshold.

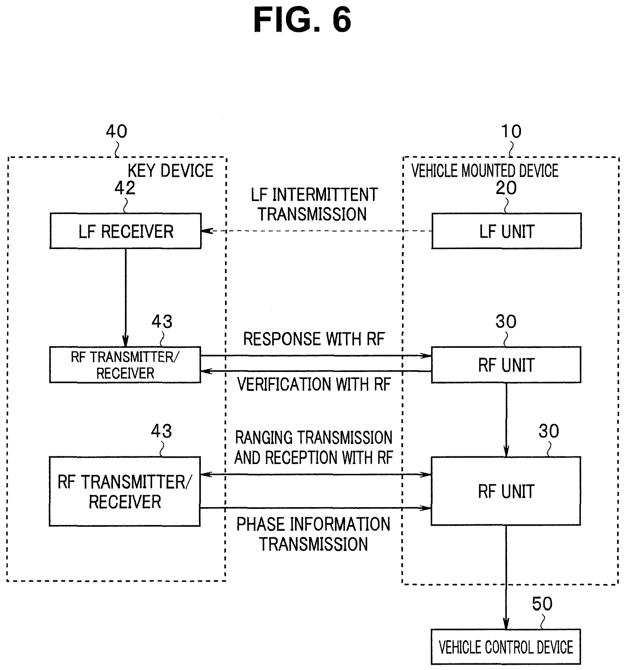

Fig. 6 is a diagram for explaining a mechanism of the smart entry using a distance-measuring result. When the RF unit 30 succeeds in verification using the RF communication between the RF unit 30 and the RF transmitter/receiver 43, the RF unit 30 communicates with the RF transmitter/receiver 43 by using the RF signal for distance-measuring. The RF unit 30 and the RF transmitter/receiver 43 receive the RF signals from each other to detect any phase difference. For example, the RF transmitter/receiver 43 transmits a phase information acquired by receiving the RF signal for distance-measuring to the RF unit 30. The phase information may be a phase or a phase difference acquired by reception, for example. The RF unit 30 calculates the distance between the RF unit 30 and the RF transmitter/receiver 43 by using a phase information acquired by the RF transmitter/receiver 32 receiving the RF signal for distance-measuring and a phase information from the key device 40.

Note that as the RF signal for distance-measuring, a signal with the transmission power and frequency band permitted by a specific low power radio station as specified, for example, by the Japanese domestic law may be used. For example, the RF transmitter/receivers 32, 43 may be configured to transmit radio waves in 920 MHz band with a transmission power of about 0 dBm.

When the calculated distance is smaller than the predetermined threshold, the MCU 31 determines that the smart key is located in the vicinity of the vehicle 1, and outputs a permission signal to the vehicle control device 50. And when the calculated distance is equal to or greater than the predetermined threshold, the MCU 31 determines that the smart key is not located in the vicinity of the vehicle 1, and does not output a permission signal to the vehicle control device 50.

Such a communication can be repeated at predetermined intervals. When the door of the vehicle 1 is unlocked and the engine is started, the communication is repeatedly performed, and verification and distance-measuring are performed between the key device 40 and the vehicle mounted device 10.

However, when the smart key 2 is located inside the vehicle 1, the smart key 2 is affected by multipath during communication. Inside the vehicle, the influence of multipath is very large, resulting in the error of the distance-measuring result is also big, and sometimes, it is even impossible to perform the distance-measuring. Therefore, in the present embodiment, when the smart key 2 is inside the vehicle, weak radio waves are adopted in the distance-measuring communication and frequency for distance-measuring is changed. When the reception is not available because of frequency selective fading due to the influence of multipath, the signal can be received by changing the frequency.

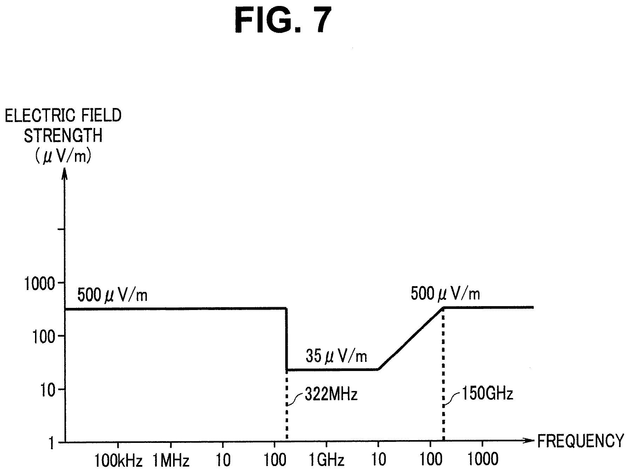

Fig. 7 is an explanatory diagram of a weak radio wave. The weak radio wave is a weak radio wave which does not require a license of a radio station, and is a radio wave transmitted from a weak radio station specified by a pertinent law in Japan. The law specifies the allowable value of the electric field strength of the weak radio wave within a distance of 3 m from a weak radio station. More specifically, when the frequency is equal or less than 322 MHz, the electric field strength is 500 µV/m or less; when the frequency is over 322 MHz and equal to or less than 10 GHz, the electric field intensity is 35 µV/m or less; when the frequency is over 10 GHz and equal to or less than 150 GHz, the electric field strength is 3.5 × f µV/m or less; and when the frequency is over 150 GHz, the electric field strength is 500 µV/m or less. Note that although the radio wave stipulated by the Japanese law as a weak radio wave is used for explanation here, in the case of using the smart key system of the present embodiment in a country other than Japan, it is also applicable in accordance with the same kind of weak radio wave rules stipulated in the relevant country.

In the present embodiment, whether the location of the smart key 2 is outside or inside of the vehicle is determined. When the location of the smart key 2 is outside of the vehicle, the radio waves permitted by the specific low-power radio station (hereinafter referred to as the radio waves publicly-used for distance-measuring) are used for distance-measuring, and when the location of the smart key 2 is inside of the vehicle, the weak radio waves are used for the distance-measuring. Note that when the smart key system of the present embodiment is used in a country other than Japan, radio waves with the transmission power and the frequency band stipulated by the legal regulations for the specific low-power radio station of the country shall be used as an equivalent to the radio waves publicly-used for distance-measuring.

The MCU 41 as the determination section determines whether the transmitter performing the LF intermittent communication is the LF units 20A or the LF units 20B based on the ID information attached to the received LF signal. If it is determined that the transmitter is one of the LF units 20A, the MCU 41 determines that the smart key 2 is located outside the vehicle, and if it is determined that the transmitter is one of the LF units 20B, the MCU 41 determines that the smart key 2 is located inside the vehicle. The MCU 41 transmits the determination result to the vehicle mounted device 10.

When the vehicle mounted device 10 receives the determination result that the smart key 2 is located outside the vehicle, the MCU 31, as the determination section and the control section, controls the RF transmitter/receiver 32 to use the radio wave publicly-used for distance-measuring upon the distance-measuring. And when the vehicle mounted device 10 receives the determination result that the smart key 2 is located inside the vehicle, the MCU 31 controls the RF transmitter/receiver 32 to use the publicly-free-use radio wave for distance-measuring and the weak radio wave upon the distance-measuring. Note that the MCU 41 transmits the ID information in the original form to the MCU 31, and MCU 31 may determine the position of the smart key 2.

When the timing of the LF intermittent communication of each LF unit 20 can be caught by the MCU 31, it is also possible to determine whether the location of the smart key 2 is inside or outside of the vehicle by the timing of the response from the key device 40. For example, when the MCU 31 controls the plurality of LF units 20, the reception window of the RF signal is opened immediately after the transmission of each LF unit 20, and waits for a response from the RF transmitter/receiver 43. Based on the above procedure, MCU 31 can determine that the response is from which LF unit 20, that is, the smart key 2 is located in the vicinity of which LF unit 20. In this case, the LF units 20 may not transmit the ID information.

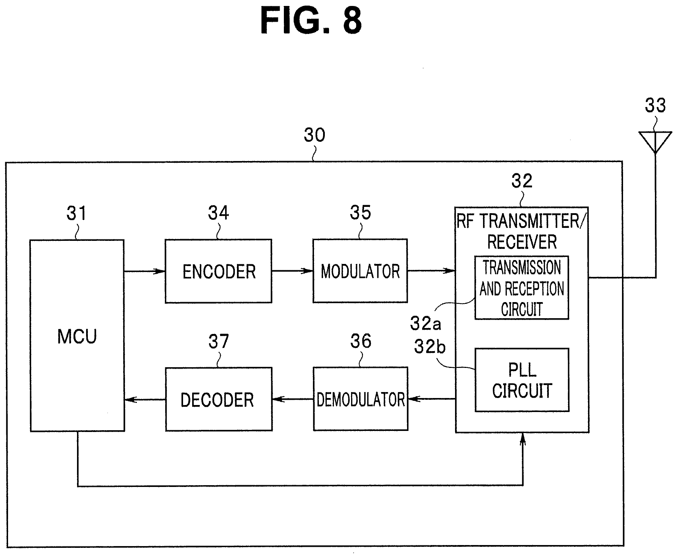

Fig. 8 is a block diagram showing an example of a specific configuration of the RF unit 30. The MCU 31 generates information for the smart key 2's verification and performs verification process. The encoder 34 encodes the information from the MCU 31 and outputs the encoded information to the modulator 35. The modulator 35 modulates the input information in a predetermined modulation manner and outputs the modulated information to the RF transmitter/receiver 32.

The RF transmitter/receiver 32 includes a transmission and reception circuit 32a and a PLL circuit 32b. Under the control of MCU 31, the PLL circuit 32b outputs an oscillation output of a predetermined frequency. The transmission and reception circuit 32a generates an RF signal by using the output of the PLL circuit 32b.

The transmission and reception circuit 32a also outputs the received signal from the antenna 33 to the demodulator 36. The demodulator 36 demodulates the received signal in accordance with the demodulation method corresponding to the RF transmitter/receiver 43's modulation method and outputs the signal to the decoder 37. The decoder 37 decodes the demodulated signal and outputs the decoded signal to the MCU 31.

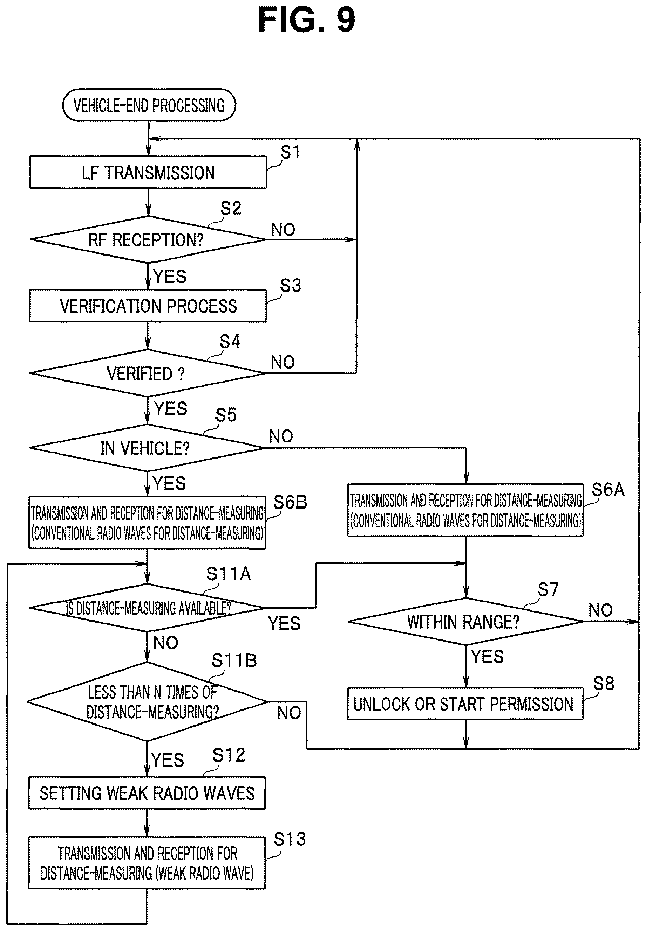

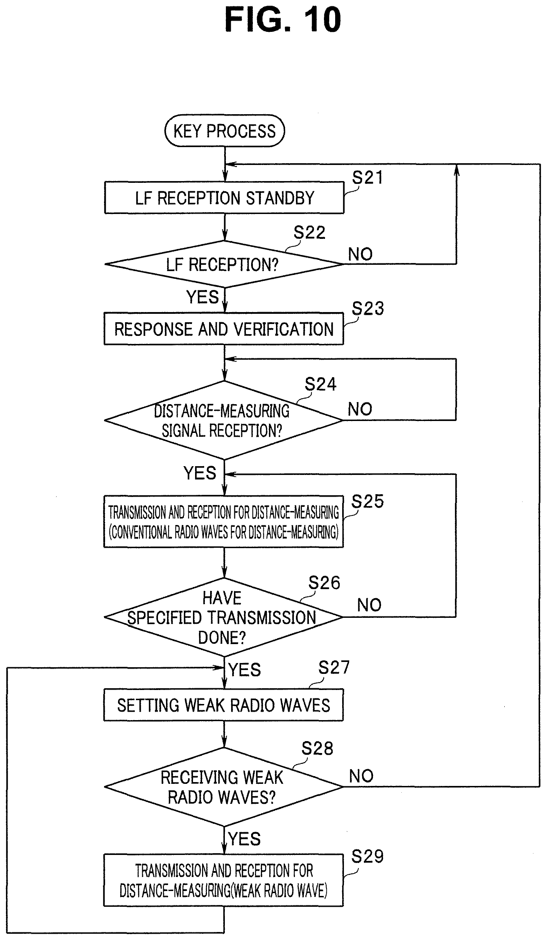

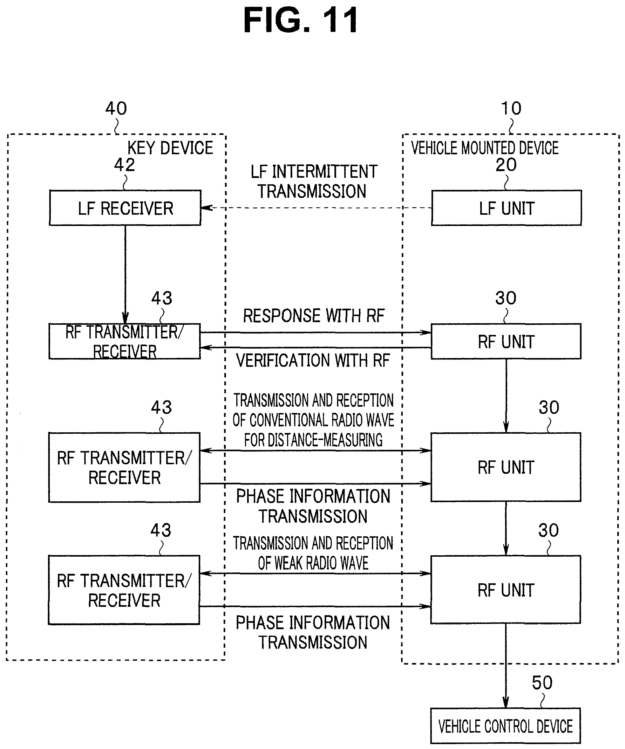

Next, the operation of the embodiment configured as described above will be described with reference to Figs. 9 to 11. Fig. 9 is a flowchart for describing the operation of vehicle mounted device 10. Fig. 10 is a flowchart for describing the operation of key device 40. Fig. 11 is a diagram for explaining a mechanism of smart entry according to the embodiment. Each of LF units 20 of the vehicle mounted device 10 intermittently transmits a radio wave (LF signal) of a low frequency (S1). Note that, in order to determine the location of the smart key 2, for example, the MCU 21 attaches the ID information for identifying the respective LF units 20 to the LF signal and performs the LF intermittent transmission.

On the other hand, the LF receiver 42 of the key device 40 is in the reception standby state for receiving the LF intermittent transmission (S21). When a user holding the smart key 2 approaches the vehicle 1, and enters the radio wave reaching range of the LF units 20, the LF receiver 42 receives the LF signal. When the LF receiver 42 receives the LF signal (S22, YES), the RF transmitter/receiver 43 transmits an RF signal as a response to perform the verification process (S23). The key device 40 enters a standby state for receiving a distance-measuring signal from the vehicle mounted device 10 (S24).

After transmitting the LF signal, the vehicle mounted device 10 is in a standby state for receiving the RF signal as a response (S2). When the RF signal is received by the RF transmitter/receiver 32 (S2, YES), the vehicle mounted device 10 starts the verification process to verify the key device 40 that made the response (S3). When RF communication is performed between the key device 40 and the vehicle mounted device 10, MCU 31 determines whether the key device 40 corresponds to the vehicle 1, that is, whether the verification is successful (S4). If the MCU 31 does not succeed in the verification (S4, NO), the process returns to S1.

When the MCU 31 succeeds in the verification (S4, YES), the MCU 31 determines whether the smart key 2 is located inside the vehicle (S5). For example, the MCU 31 determines, by the ID information, whether the source of the response is from the LF units 20A or from the LF units 20B. When the MCU 31 determines that the response is from the LF units 20B, the MCU 31 determines that the smart key 2 is located inside the vehicle (S5, YES). When the MCU 31 determines that the response is from the LF units 20A, the MCU 31 determines that the smart key 2 is located outside the vehicle (S5, NO).

The MCU 31 starts distance-measuring between the key device 40 and the vehicle mounted device 10 in order to prevent the relay attack. When the smart key 2 is located outside the vehicle, the MCU 31 instructs the RF transmitter/receiver 32 to transmit a radio wave publicly-used for distance-measuring including, for example, the frequency and the transmission power (S6A). According to the instruction, the PLL circuit 32b generates an oscillation output, and the transmission and reception circuit 32a generates a transmission signal at the predetermined level. The distance-measuring signal is then transmitted from the antenna 33 by the radio wave publicly-used for distance-measuring.

When the key device 40 receives the distance-measuring signal (S24, YES) in the reception standby state, the distance-measuring signal is transmitted to the vehicle mounted device 10 using the radio wave publicly-used for distance-measuring (S25). Therefore, the distance-measuring is performed between the key device 40 and the vehicle mounted device 10 by using the radio wave publicly-used for distance-measuring. The MCU 41 also transmits the acquired phase information by the reception to the vehicle mounted device 10.

The MCU 31 calculates the distance between the RF transmitter/receiver 32 and the RF transmitter/receiver 43 based on the acquired phase information. The MCU 31 determines whether the calculated distance is within the predetermined range or not (S7). The predetermined range is generally the reaching distance of radio waves generated from each LF unit 20.

When a response is generated by the relay attack, the smart key 2 will be located at a location relatively far from the vehicle 1 (outside of the predetermined range). The MCU 31 determines from the calculated distance that the smart key 2 is not located in the vicinity of the vehicle 1 (S7, NO), and the process returns to S1. When the calculated distance is within the predetermined range (S7, YES), the MCU 31 outputs a permission signal of permitting unlocking the door to the vehicle control device 50 (S8).

It is assumed that the user who unlocks the door gets into the vehicle and tries to start the engine. Similarly, the operations S1 to S5 are performed in the vehicle mounted device 10, and the operations S21 to S25 are performed in the key device 40.

When it is determined that the smart key 2 is located inside the vehicle (S5, YES), the MCU 31 performs distance-measuring by transmitting and receiving the radio wave publicly-used for distance-measuring (S6B). The MCU 31 determines whether distance-measuring can be performed (S11A) or not. In a vehicle where the influence of multipath is relatively large, sometimes, distance-measuring is impossible to use radio wave publicly-used for distance-measuring. In this case, distance-measuring between the key device 40 and the vehicle mounted device 10 is performed by using weak radio waves instead of the radio wave publicly-used for distance-measuring.

The weak radio wave has a wide frequency band, and it is possible to perform multiple distance-measuring by changing the frequency, and the reliability of distance-measuring can be increased by avoiding the effect of fading. However, from the viewpoint of user experience, it is necessary to end the distance-measuring within a limited number of times. Therefore, the number of times of retrying n is set, and when the number of times of distance-measuring at different frequencies reaches n, the distance-measuring is ended.

In other words, when the MCU 31 determines that the distance-measuring cannot be performed (S11A, NO), the MCU 31 checks whether the number of times of distance-measuring with the weak radio waves is smaller than n (S11B). When the number of times of distance-measuring is less than n (S11B, YES), the MCU 31 instructs the RF transmitter/receiver 32 to transmit weak radio waves (S12). The MCU 31 specifies a frequency band that can be used as weak radio waves, and specifies weak transmission power at the same time. The PLL circuit 32b generates an oscillation output that can be used as weak radio waves, and the transmission and reception circuit 32a generates a weak transmission signal at a predetermined level. A distance-measuring signal using the weak radio waves is transmitted from the antenna 33 (S13). Note that the number of times of distance-measuring n can be changed as appropriate.

When the MCU 41 determines that the transmission of the radio wave publicly-used for distance-measuring is completed (S26, YES), the MCU 41 sets transmission of the weak radio wave (S27), and enters a reception standby state for receiving the distance-measuring signal (S28). Even if the distance-measuring signal is not received after the predetermined period has elapsed (S28, NO), the process of the MCU 41 returns to S21.

When the RF transmitter/receiver 43 receives a distance-measuring signal which uses weak radio wave (S28, YES), the RF transmitter/receiver 43 transmits the distance-measuring signal using the weak radio waves (S29). The MCU 41 also transmits the acquired phase information to the vehicle mounted device 10. The MCU 31 calculates the distance between the key device 40 and the vehicle mounted device 10 based on the phase information acquired by transmitting and receiving the distance-measuring signal using weak radio waves. Then the MCU 31 determines whether distance-measuring can be performed (S11A).

If it is determined that the distance-measuring cannot be performed by using the set weak radio wave, the MCU 31 sets another weak radio wave having a frequency different from the former. The RF unit 30 transmits and receives the distance-measuring signal by the set weak radio wave (S13). And the MCU 41 can also set the weak radio waves of a frequency different from the former (S27). Setting and resetting of weak radio waves between the vehicle mounted device 10 and the key device 40 are performed in the order of, for example, frequencies that are determined in advance. When the MCU 41 receives the weak radio waves of the frequency same as the setting (S28), it transmits the distance-measuring signal of the weak radio waves (S29). Thereafter, the same operation is repeated within the number of times of distance-measuring less than n, until the MCU 31 determines that the distance-measuring is possible, and in the above procedure, the vehicle mounted device 10 repeatedly conducts the distance-measuring with the weak radio waves while changing the frequencies. Note that when the number of times of distance-measuring reaches n (S11B, NO), the process of the MCU 31 returns to S1.

By changing the frequency, the influence of multipath can be avoided in many cases. When the MCU 31 determines that the distance-measuring is possible (S11A, YES), the MCU 31 executes S7. When the user holding the smart key 2 is located inside the vehicle 1, because the distance calculated by the MCU 31 is within the predetermined range, the MCU 31 outputs a permission signal allowing the engine to start to the vehicle control device 50 (S8). Thus, the start of the engine of the vehicle 1 is permitted by the vehicle control device 50. Note that when the distance-measuring is possible, transmission of weak radio waves is stopped, and the process of MCU 41 returns from S28 to S21.

As described above, in the present embodiment, when it is detected that the smart key to be distance-ranged is located inside the vehicle, control procedure is performed in order to perform communication for the distance-measuring while changing the frequency of the weak radio wave. Since the variable distance-measuring frequency is therefore increased, the influence of multipath can be avoided and reliable distance-measuring can be obtained.

Note that in the above embodiment, although the example of changing the frequency of the radio waves publicly-used for distance-measuring has not been explained, however, when it is determined that the distance-measuring cannot be performed, first of all, the frequency of the radio waves publicly-used for distance-measuring may be changed. In addition, if it is still not possible for distance-measuring, even if the frequency of the radio waves publicly-used for distance-measuring has been changed in a predetermined number of times, it is possible to start distance-measuring using weak radio waves.

### (Embodiment 2)

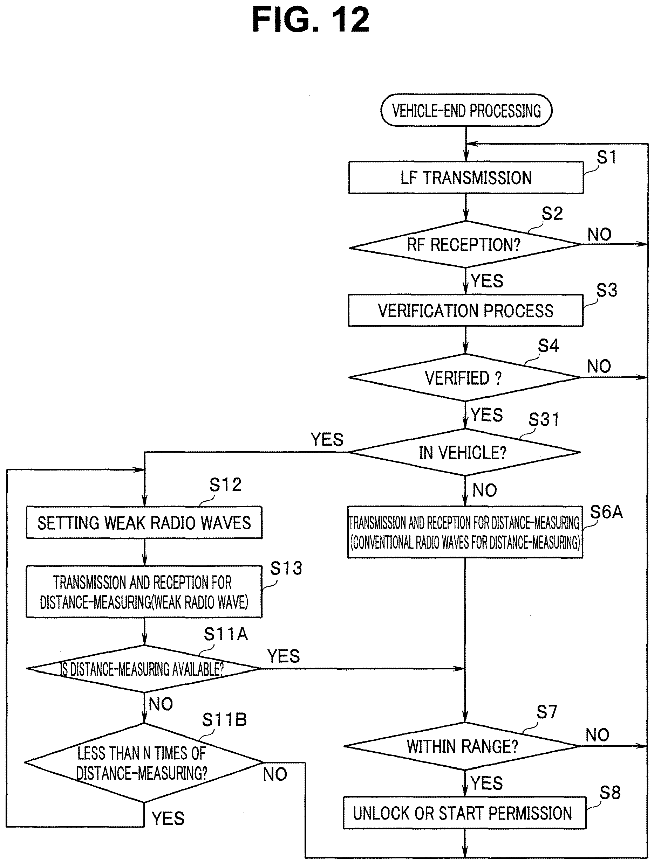

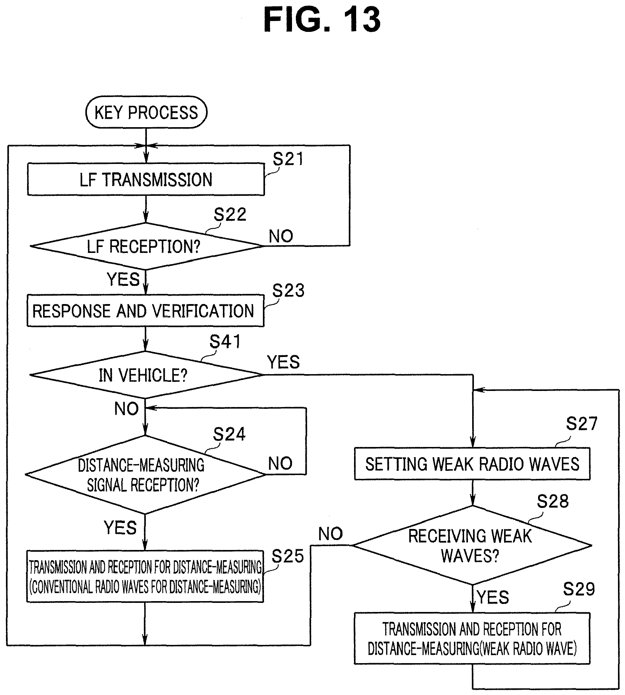

Fig. 12 and Fig. 13 are flowcharts showing operations employed in a second embodiment of the present invention. In Fig. 12 and Fig. 13, the same steps as the steps in Fig. 9 and Fig. 10 are assigned with the same reference numerals as in Fig. 9 or Fig. 10, and the description of the steps is omitted. Fig. 12 shows an operation of the vehicle mounted device 10 and Fig. 13 shows an operation of the key device 40. Note that the hardware configuration in the present embodiment is similar to the configuration in the embodiment 1. In the present embodiment, when the smart key 2 is located inside the vehicle, distance-measuring is generally performed by using the weak radio waves from the beginning without using the radio waves publicly-used for distance-measuring.

After successful verification (S4, YES), the MCU 31 of the vehicle mounted device 10 determines whether the smart key 2 is located inside the vehicle or not (S31). When the MCU 31 determines that the smart key 2 is located outside the vehicle (S31, NO), the MCU 31 performs communication for distance-measuring using the radio waves publicly-used for distance-measuring (S6A).

When the MCU 41 of the key device 40 performs an RF transmission as a response and an RF communication for verification (S23), the MCU 41 determines whether the smart key 2 is located inside the vehicle or not (S41). When the MCU 41 determines that the smart key 2 is located outside the vehicle (S41, NO), the MCU 41 enters a standby state for distance-measuring communication using the radio waves publicly-used for distance-measuring (S24). When the key device 40 receives the radio wave publicly-used for distance-measuring, the key device 40 performs distance-measuring communication by using the radio wave publicly-used for distance-measuring (S25).

When the distance-measuring using the radio wave publicly-used for distance-measuring is finished, the MCU 31 determines whether the calculated distance is within the predetermined range (S7), and when the distance is within the predetermined range (S7, YES), the MCU 31 generates a permission signal (S8).

When the MCU 31 determines that the smart key 2 is located inside the vehicle (S31, YES), the MCU 31 performs distance-measuring communication using weak radio waves (S12). Also, when the MCU 41 determines that the smart key 2 is located inside the vehicle (S41, YES), the MCU 41 sets weak radio waves (S27), and enters communication standby state for weak radio waves (S28). When the key device 40 receives the weak radio wave (S28, YES), the distance-measuring communication using the weak radio wave is performed (S29).

When the MCU 31 determines that the distance-measuring cannot be performed even using the weak radio wave (S11A, NO), if the number of distance-measuring times is less than n (S11B, YES), the frequency of the weak radio wave is set again (S12), and the distance-measuring communication is repeated. When the MCU 31 determines the distance-measuring can be performed (S11A, YES), it proceeds to S7. The MCU 31 generates a permission signal (S8), when the calculated distance is within the predetermined range (S7, YES).

In the present embodiment, it is firstly decided whether the smart key 2 is located inside the vehicle or not. When the smart key 2 is located inside the vehicle, distance-measuring communication is performed with the weak radio waves. Therefore, the present embodiment can obtain the same effects as the effects of the embodiment 1. In other words, the variable distance-measuring frequency is increased, and distance-measuring is possible while avoiding the influence of multipath.

Note that in each of all the embodiments described above, an example in which the distance-measuring target is located within a predetermined range is determined and distance-measuring with weak radio waves is performed. However, when the distance-measuring target is located even outside the vehicle, large influence of multipath may occur in some areas. Therefore, the distance-measuring with the weak radio wave may be determined based on whether the distance-measuring target is located within a range in which the influence of multipath is large.

In each of all the embodiments described above, an example in which whether the smart key 2 is located inside the vehicle is determined by the occurrence of response to the LF intermittent communication of the LF units 20B. However, it may be assumed that within a certain period of time since the door is opened, the smart key 2 is located inside the vehicle, and the distance-measuring may be performed with the weak radio wave.

Further, it is also possible to determine that the distance-measuring target is located within a predetermined range in which the influence of the multipath is large, on basis of the stability of the phase measurement, the reliability of the distance-measuring result, or the number of failures of the distance-measuring. Similarly, the change in frequencies may also depend on the conditions of the stability of the phase measurement, the reliability of the distance-measuring result, the number of failures in distance-measuring or the frequency vacancy state in carrier sense.

Further, in each of the embodiments described above, the distance-measuring with the weak radio wave may be switched by user's operation, such as pressing a button or setting a mode by the user. In addition, when the RSSI (received signal strength indication) is good, it is determined that the key device 40 is located in the vicinity of the vehicle mounted device 10, and the distance-measuring may be switched to use the weak radio wave. To use the weak radio wave may reduce power consumption in distance-measuring.

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made without departing from the spirit of the inventions. The accompanying claims and their equivalents are intended to cover such forms or modification as would fall within the scope and spirit of the inventions.

## Claims

1. A distance-measuring system configured to calculate a distance between a first device and a second device based on transmission and reception between the first device and the second device, the distance-measuring system comprising:
a communication section configured to communicate with a first frequency band and/or with a second frequency band different from the first frequency band;
a determination section configured to determine whether the first device is located within a predetermined range of the second device; and
a control section configured to control to perform a distance-measuring operation with the first frequency band when a determination result of the determination section shows that the first device is not within the predetermined range, and to perform a distance-measuring operation with the second frequency band when a determination result of the determination section shows that the first device is within the predetermined range.

2. The distance-measuring system according to claim 1, wherein the second frequency band corresponds to a weak radio wave specified by each country's radio law.

3. The distance-measuring system according to claim 1, wherein, when the determination result showing that the first device is within the predetermined range is obtained, the control section controls to perform a distance-measuring operation with the second frequency band when the distance-measuring cannot be performed with the first frequency band.

4. The distance-measuring system according to claim 1, wherein the control section controls to perform a distance-measuring operation while changing the second frequency band.

5. The distance-measuring system according to claim 1, wherein
the first device includes a first communication section,
the second device includes a second communication section that can only communicate within the predetermined range, and a third communication section that can communicate outside the predetermined range, and
when the first communication section communicates with the third communication section, the determination section determines that the first device is outside the predetermined range, and when the first communication section communicates with the second communication section, the determination section determines that the first device is within the predetermined range.

6. The distance-measuring system according to claim 1, wherein
the first device is configured of a smart key,
the second device is configured of a vehicle mounted device, and
the predetermined range is an area inside the vehicle in which the vehicle mounted device is installed.

7. The distance-measuring system according to claim 6, wherein, when a verification is successful by a verification process between the smart key and the vehicle mounted device, the control section controls to perform distance-measuring.

8. The distance-measuring system according to claim 6, wherein,
the smart key includes a first communication section,
the vehicle mounted device includes a second communication section capable of communicating only inside the vehicle and a third communication section capable of communicating outside the vehicle,
when the first communication section communicates with the third communication section, the determination section determines that the smart key is outside the vehicle, and when the first communication section communicates with the second communication section, the determination section determines that the smart key is inside the vehicle, and
when the determination result of the determination section shows that the smart key is outside the vehicle, the control section performs a distance-measuring operation with radio waves publicly-used for distance-measuring, and when the determination result of the determination section shows that the smart key is located inside the vehicle, the control section performs a distance-measuring operation with weak radio waves.

9. A distance-measuring method for calculating a distance between a first device and a second device based on transmission and reception between the first device and the second device; the method comprising:
performing communication with a first frequency band and/or with a second frequency band different from the first frequency band;
determining whether the first device is located within a predetermined range of the second device; and
when the determination shows that the first device is not located within the predetermined range, performing a distance-measuring operation with the first frequency band, and, when the determination shows that the first device is located within the predetermined range, performing a distance-measuring operation with the second frequency band.

10. The distance-measuring method according to claim 9, wherein, when the determination shows that the first device is within the predetermined range, control is performed to perform a distance-measuring operation with the second frequency band when the distance-measuring cannot be performed with the first frequency band.

11. A distance-measuring device configured to calculate a distance between a first device and a second device based on transmission and reception between the first device and the second device, the distance-measuring device comprising:
a communication section configured to communicate with a first frequency band and/or with a second frequency band different from the first frequency band;
a determination section configured to determine whether the first device is within a predetermined range; and
a control section configured to control to perform a distance-measuring operation when a determination result of the determination section shows that the first device is not within the predetermined range, and to perform the distance-measuring operation with the second frequency band when a determination result shows that the first device is within the predetermined range.
